# EUROPEAN PATENT APPLICATION

(11) **EP 2 147 716 A2**
(43) Date of publication of application: **27.01.2010**
(21) Application number: 08168188.4
(22) Date of filing: 03.11.2008
(51) Int. Cl.: B01F 13/10, B01F 15/02, B01F 11/00, B29B 7/94, B29C 47/10

(54) **System and method for moulding coloured synthetic products, and a dye dispensing apparatus.**

(30) Priority: 02.11.2007 US 934211
(71) Applicant: Stibbe Management B.V., 1261 EB Blaricum (NL)
(72) Inventor: Hellenberg, Dirk, 2171 SB Sassenheim (NL); Hellenberg, Leendert, 2171 SC Sassenheim (NL); Mink, Johannes Hendrikus, 2211 VE Noordwijkerhout (NL)
(74) Representative: Vermeulen, Martijn

(57) **Abstract**

The invention relates to a system (100) for moulding coloured synthetic products, comprising at least one moulding apparatus (101) for moulding synthetic products, a dye dispensing apparatus (102), and at least one collector (110) to collect dispensed dyes. The dye dispensing apparatus (102) comprises a plurality of containers (104), each container configured to hold a liquid polymer dye, and a dispensing unit (150) for dispensing one or more dyes from one or more of said plurality of containers. The moulding apparatus comprises a connection device (152) configured to connect the collector (110) to the moulding apparatus (101) for introduction of the dispensed dyes in the moulding apparatus.

## Description

System and method for moulding coloured synthetic products, and a dye dispensing apparatus.

### FIELD OF THE INVENTION

The present invention relates to a system and method for moulding coloured synthetic products. Furthermore, the present invention relates to a dye dispensing apparatus.

### BACKGROUND OF THE INVENTION

Products of coloured synthetic material are well-known. These products are mostly made by moulding, such as injection moulding, blow moulding or extrusion.

For making a moulded product of synthetic material a base material is needed. Considering the material characteristics of thermoplastics, this is a very suitable material for moulding, and especially for extrusion moulding. Generally, in extrusion moulding there are two different methods, one is a continue process and the other one is a discontinue process. With the discontinue process a bar of thermoplastic material is inserted in the extruder and pushed through the mould. The continue process uses granules as base material. These granules are inserted in the extruder through a hopper. From the hopper the granules are transported through a barrel by a feed screw. During this transportation the granules are compressed and the extruder tube is heated from the exterior to help the melting of the granules and to prevent the melted granules from sticking to the tube wall. When the granules are melted into a viscous paste, this paste is pressed through the mould to get the desired shape of the product.

Most polymeric products are coloured, i.e. have a colour that does not normally come with the natural colour of the polymer. To get the desired colour for the product, the granules have been given a colour before being inserted into the extruder, or coloured granules or pigment powders are introduced in the hopper, and mixed in the extruder before the viscous paste resulting from pressurizing and heating the granules comes in the mould.

In an alternative embodiment for manufacturing synthetic products having a desired colour, a colour mixing device is directly mounted on an extruder. The mixing device makes use of a number of base colours based on polymer dyes. To obtain a certain colour of the synthetic products, a certain combination of the base colours is simultaneously injected in the flow in the extruder during the extrusion process. During injection of the different dyes, the dyes are mixed to obtain the desired colour to be mixed with the granules or the liquid thermoplastic flow.

The injector device has a complex geometry to simultaneously inject the dyes with high accuracy, and at the same time provide the desired homogenisation. This makes the mixing device relatively complex, and typically only a small maximum number of the base colours can be mixed simultaneously to guarantee a homogenous colour in the final products. As a result, the variety in colours which may be dispensed is practically limited and the mixing device is relatively expensive.

Another drawback is that after each use the mixing device has to be cleaned for a subsequent use. Furthermore, since the mixing device is directly mounted on the extruder device, for each extruder a complex and relatively expensive mixing device has to be used to mix the polymer dyes in the flow of thermoplastics material in the extruder.

An object of the invention is to provide an alternative system for moulding coloured synthetic products, wherein products with a large variety of colours can be produced without the need of having each of these colours in stock.

Another object of the invention is to provide a system for moulding coloured synthetic products which is flexible and can easily be used for different moulding apparatus or even different types of moulding apparatus.

According to an aspect of the invention, there is provided a system for moulding coloured synthetic products, comprising:
- at least one moulding apparatus for moulding synthetic products,
- a dye dispensing apparatus comprising;
   - a plurality of containers, each container configured to hold a liquid polymer dye, and
   - a dispensing unit for dispensing one or more dyes from one or more of said plurality of containers, and
- at least one exchangeable collector to collect dispensed dyes from the dye dispensing apparatus,
wherein the moulding apparatus comprises a connection device configured to connect the collector to the moulding apparatus for introduction of the dispensed dyes in the moulding apparatus.

An advantage of such system is that the collector can be filled with a mixture of dyes from the dye dispensing apparatus having a certain colour without the requirement that this exact colour is in stock. On the basis of a limited number of mixing colours, for instance sixteen, twenty-four or thirty-two, a large number of colours can be obtained. Thus only this limited number of mixing colours has to be in stock.

Moreover, as the mixture of dyes dispensed in the collector may be thoroughly mixed, for instance in a shaker apparatus, before being connected to the moulding apparatus, the mixture can be relatively easy homogenized. Therewith a constant colour may be obtained for all moulded products, even when a large number of base colours are mixed with each other.

Further, the system provides the opportunity to provide collectors with a specific colour, which can be placed in stock. This may in particular be advantageous when relative small stocks of specific colours are needed, which now can be made by the manufacturer of the moulded products himself.

Furthermore, since for each application the desired quantity may be chosen, it is no longer required to buy a standard quantity of a certain specific colour. For instance, using the system it is possible to mix a quantity of two litres of a certain colour in the collector. Since the other liquid is still in base colours, these liquids can still be used to mix other colours. In the old situation, standard packages for instance could contain five litres of liquid, while only two litres would be required. In such case the other three litres would be disposed as it is not required for the production process.

Further, the system has the advantage that the exchangeable collectors which are filled at the dye dispensing apparatus may be used for one of two or more moulding apparatus. These moulding apparatus may be of the same type, for instance extruders, but may also be of different type for instance an extruder and a blow-moulding or an injection moulding apparatus.

In an embodiment, the filling cartridge and the collector have the same size and shape.

In an embodiment, each collector comprises a collector connector configured to connect the collector to the connection device.

In an embodiment, cartridges which are used to fill the containers of the dye dispensing device may also be configured such that the cartridge may be directly connected to the connection device. In such embodiment, the base colours of the dye dispensing apparatus may also directly be used for colouring a flow of thermoplastics material in the moulding apparatus.

In such embodiment, each filling cartridge for filling a container of the dye dispensing apparatus may comprise a corresponding connector so that the filing cartridge may also directly be connected to the connection device of the moulding apparatus.

According to an aspect of the invention, there is provided a method for producing coloured synthetic products, comprising the steps of:
- providing at least one moulding apparatus for moulding synthetic products, having a connection device,
- providing a dye dispensing apparatus comprising;
   - a plurality of containers, each container configured to hold a liquid polymer dye, and
   - a dispensing unit for dispensing one or more dyes from one or more of said plurality of containers,
- providing at least one exchangeable collector to collect said dispensed dyes, the collector being connectable to the connection device,
- dispensing one or more dyes from one or more of said plurality of containers in the collector to provide a mixture of dyes having a desired colour,
- connecting the collector to the connection device,
- introducing the mixture of dyes from the collector in the moulding apparatus, and
- moulding one or more synthetic products with said moulding apparatus.

According to an aspect of the invention, there is provided a dye dispensing apparatus comprising;
- a plurality of containers, each container configured to hold a liquid, and
- a dispensing unit for dispensing one or more dyes from one or more of said plurality of containers,
wherein said dye dispensing apparatus further comprises a container filling apparatus, said container filling apparatus comprising:
- a holding device to hold a flexible filling cartridge containing a liquid polymer dye; and
- a squeeze device to squeeze the filling cartridge above a respective container of said plurality of containers to dispense the dye into the container.

In an embodiment, the holding device is rotatable between a first position in which a filling cartridge may be placed in the holding device, and a second position in which an opening of the filling cartridge is positioned above the container to be filled.

In an embodiment, the squeezing device comprises a plate-shaped object which is rotatable in the holding device to squeeze the filling cartridge.

In an embodiment, the container filling apparatus comprises a handle which is pivotable about an axis, wherein pivoting movement of the handle provides rotation of the holding device from the first position to the second position and further pivoting movement of the handle provides squeezing of the filling cartridge, and/or

In an embodiment, the squeezing device comprises a locking mechanism to prevent the plate shaped object from moving in a direction opposite the squeezing direction during at least a part of the squeezing movement.

Numerous other advantages and features of the invention will become readily apparent from the following detailed description of the invention and the embodiments thereof, from the claims, and the accompanying drawings.

### SHORT DESCRIPTION OF THE DRAWINGS

Embodiments of the invention will now be described in more detail, by way of example only, with reference to the accompanying schematic drawings in which:
- Figure 1 shows a top view of the system according to the invention;
- Figure 2 shows a side view of the dye mixing apparatus according to the invention; and
- Figures 3-7 depict perspective views of a container filling apparatus.

### DETAILED DESCRIPTION OF A PREFERRED EMBODIMENT

While the invention is susceptible to embodiments in many different forms, there are shown in the drawings and will be described herein, in detail, the preferred embodiments of the present invention. It should be understood, however, that the present disclosure is to be considered an exemplification of the principles of the invention and is not intended to limit the spirit or scope of the invention and/or embodiments illustrated

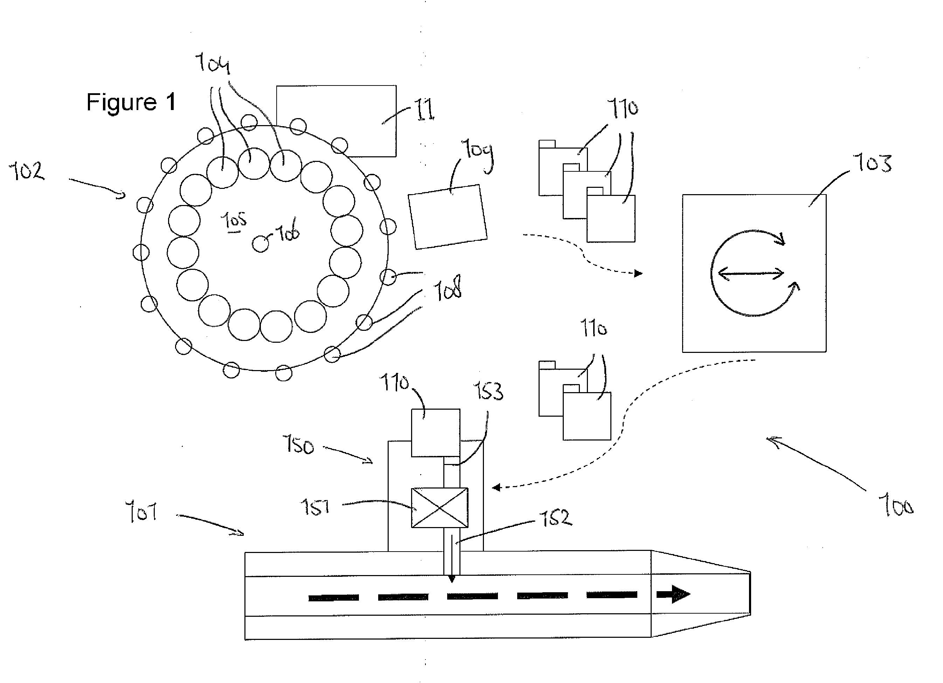

Figure 1 shows a top view of a system 100 according to the invention. The system 100 comprises a moulding apparatus 101, a dye dispensing apparatus 102, and a shaker apparatus 103. The moulding apparatus 101, dye dispensing apparatus 102 and shaker apparatus 103 are preferably located relatively close to each other, in particular at the same manufacturing location, for instance in the same manufacturing hall.

The moulding apparatus 101, for example a extruder, injection moulding apparatus or a blow moulding apparatus, is configured to mould synthetic products, and may for instance comprise a feed screw which is arranged in a barrel. An amount of thermoplastic granules may be fed in an annular space between feed screw and barrel. Due to rotation of the feed screw the granules may be moved towards an end of the extruder. Due to friction between granules, internal barrel wall and feed screw the granules may melt. The molten plastic material is fed to a mould wherein the synthetic product is formed. The product may be a profile or a separate product and may be formed continuously or discontinuously. Moulding apparatus as such are known.

The moulding apparatus 101 comprises an injection device 150 to inject a single liquid polymer dye in the moulding apparatus 101, in particular in the flow of molten thermoplastics material in the moulding apparatus. The injection device 150 is of relative simple design and comprises a pump 151, an injection channel 152 and a connection device 153. The connection device 153 is configured for the connection of a collector 110 comprising a mixture of dyes. As an alternative, the connection device 153 may also be used to connect other types of containers to the moulding apparatus, as will be explained hereinafter. The connection device may for instance be formed by a screw type connection. The pump 151 is configured to pump dyes from a collector 110 connected to the connection device 153 through the injection channel 152 into the moulding apparatus 101.

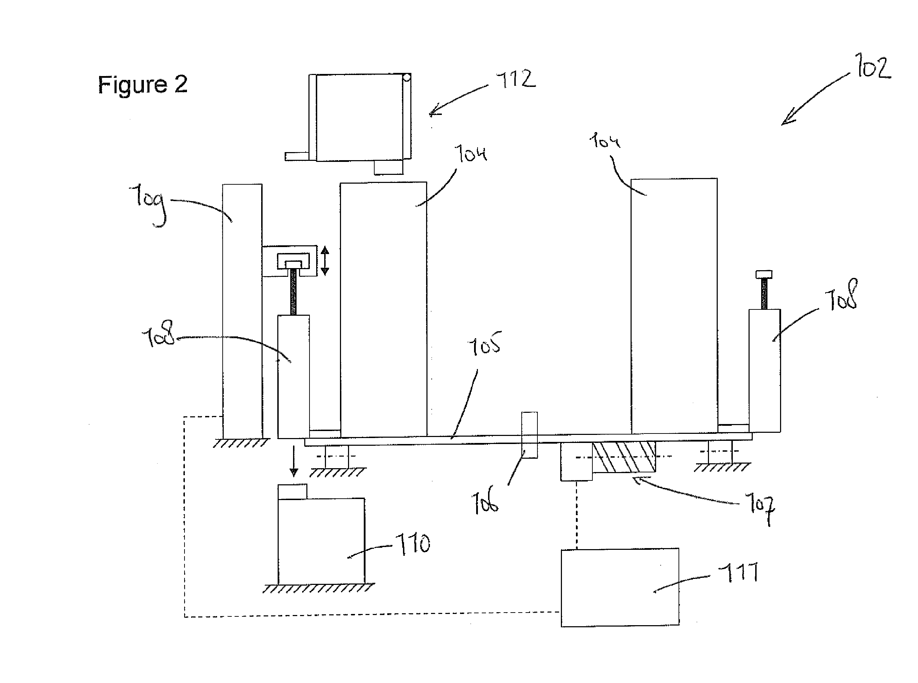

The dye dispensing apparatus 102, shown in more detail in Figure 2, comprises a plurality of containers 104. Each container 104 comprises a liquid polymer dye of a certain colour. Normally, the dispensing apparatus 102 comprises a specific number of containers 104, for instance sixteen (16), twenty-four (24) or thirty-two (32) each comprising a certain base colour, therewith providing a system in which a limited number of colours can be used to provide a large quantity of colours by mixing the different base colours. Any type of containers 104 may be used. In the embodiment shown the containers 104 have an open top so that the containers can be easily refilled from the top as will be explained hereinafter in more detail.

The containers 104 are arranged in a circle on a rotatable table 105, which is rotatably supported by an axis 106 and a number of rollers. The support table 105 may be driven by a worm drive 107. Any other suitable rotatable support for the containers 104 or driving device 107 for the support table 105 may also be provided. For each container 104 a piston pump 108 is provided at the circumference of the support table 105. Each piston pump 108 is configured to pump dye from a respective container 104.

A stationary pump actuation device 109 is provided at a dispensing location close to the circumference of the support table 105 so that each of the piston pumps 108 can be aligned with the pump actuation device 109 so that the pump 108 aligned wit the pump actuation device 109 can be actuated, as indicated at the left side of Figure 2 by a double pointed arrow.

At the dispensing location, a collector 110 is arranged which can be used to collect dyes dispensed from the containers 104. The collector 110 is preferably an exchangeable device in which dyes can be mixed to obtain a dye of a certain mixed colours. In practice, many collectors 110 may be used which are preferably disposable so that for each new colour mix a new collector 110 may be used. As an alternative the collectors 110 are re-usable after cleaning.

The dye dispensing apparatus 102 may further comprise a computer 111 or other control means to control the dispensing of the dyes of the different containers 104. The computer has input means and display means for interaction with a user. Preferably the dye dispensing apparatus 102 is configured to perform all dispensing tasks automatically, i.e. aligning of the respective pump 108 with the pump actuation device 109, and actuating the pump actuation device 109 to dispense the required quantities of dye from each container 104 (as indicated by dashed lines. However, one or more of these tasks may also be performed manually.

Generally, in an automatic dispensing apparatus 101 a certain colour and a certain quantity will be requested by a user in the computer 111. The computer 111 will determine a colour recipe on the basis of the request. Such recipe may for instance be present in a database or be calculated on the basis of information on a certain colour in the database, and will typically comprise a combination of quantities of dyes of different colours from the containers 104. Then, the computer 110 will perform the required dispensing operations by subsequently aligning the respective pumps 108 associated with the containers 104 containing the desired colours with the pump actuation device 102, and actuate the pump actuation device 102 to dispense the required quantities of dye from each of the containers 104.

After all required quantities of dye have been dispensed from the containers 104 the recipe is completed. The collector 110 may be taken away from the dispensing location and a new collector 110 may be placed at the dispensing location. The new collector 110 may be empty or already contain a liquid for instance a liquid having a base colour.

The general construction of a dispensing device for dispensing liquids from a number of containers, as described above, is known for colouring a paint base material to provide a quantity of paint with a certain desired colour. Such apparatus is for instance disclosed in W02005/082510.

As a novel aspect, on top of the dye dispensing apparatus 102, a container filling apparatus 112 is provided. The container filling apparatus 112 is configured to easily and without substantial spilling fill a container 104 via an open top end of the container 104, when such filling is required. The container filling apparatus 111 will be discussed hereinafter in more detail.

Now again referring to Figure 1, a collector 110 filled with a mixture of dyes from the dye dispensing apparatus, may be taken from the dispensing location of the dye dispensing apparatus and transferred to the shaker apparatus 103. The shaker apparatus 103 is configured to shake the contents of the collector to homogenize the contents of the collector, i.e. the mixture of dyes. For this purpose the shaker apparatus 103 comprises a holding device for holding the collector 110.

Preferably, the shaker apparatus 103 is a bi-axial shaker apparatus, which moves the collector simultaneously in a translating and rotating movement. Any other type of shaker apparatus may also be applied.

After the contents of the collector 110 have been shaken in the shaker apparatus 102, the collector 110 may be transferred to the injection device 152 and connected to the connection device 153. When the collector is connected to the injection device 152, the moulding process may be started and the liquid dye may be pumped from the collector 110 into the moulding apparatus 101 to obtain synthetic products having a desired colour.

It is remarked that when no mixing of the mixture of dyes is required, the collector may directly transferred from the dye dispensing apparatus 102 to the moulding apparatus 101. Also, it may be possible that the shaker apparatus 103 is integrated in the dye dispensing device 102.

Thus the system 100 provides a flexible system wherein collectors 110 filled in the dye dispensing apparatus 102 may be transferred to a shaker apparatus 103 and, subsequently to the injection device 150 of moulding apparatus 101 (as indicated by arrows in Figure 1).

An advantage of the system 100 is that the collector 111 can be filled with a mixture of dyes having a certain colour without the requirement that this exact colour is in stock. On the basis of a limited number of mixing colours, for instance sixteen, twenty-four or thirty-two, a large number of colours can be obtained. Thus only this limited number of mixing colours has to be in stock.

Further, the system 100 has the advantage that the collectors 110 which are filled at the dye dispensing apparatus 102 may be used for one of two or more moulding apparatus 101. These moulding apparatus may be of the same type, for instance extruders, but may also be of different type for instance an extruder and a blow-moulding or an injection moulding apparatus.

In an embodiment, cartridges which are used to fill the containers 104 of the dye dispensing device 102, may also be configured such that the cartridge may be directly connected to the connection device 153. In such embodiment, the base colours of the dye dispensing apparatus 102 may also directly be used for colouring a flow of thermoplastics material in the moulding apparatus 101.

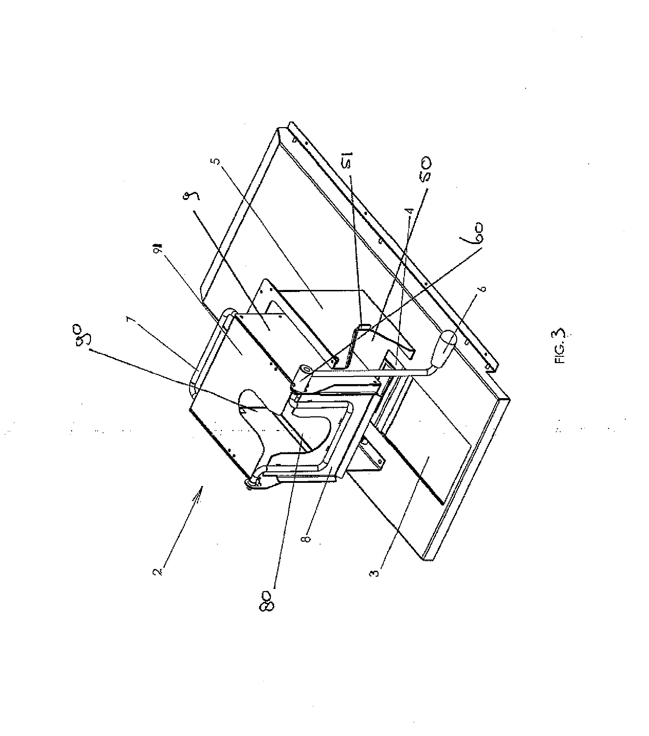

Figures 3-7 depict four perspective views of a container filling apparatus 2, which may be arranged on the top side of the dye dispensing apparatus 102. The container filling apparatus is used to fill the containers of the due dispensing apparatus. The steps of filling the containers with the container filling apparatus are described in detail hereafter, with reference to the accompanying figures.

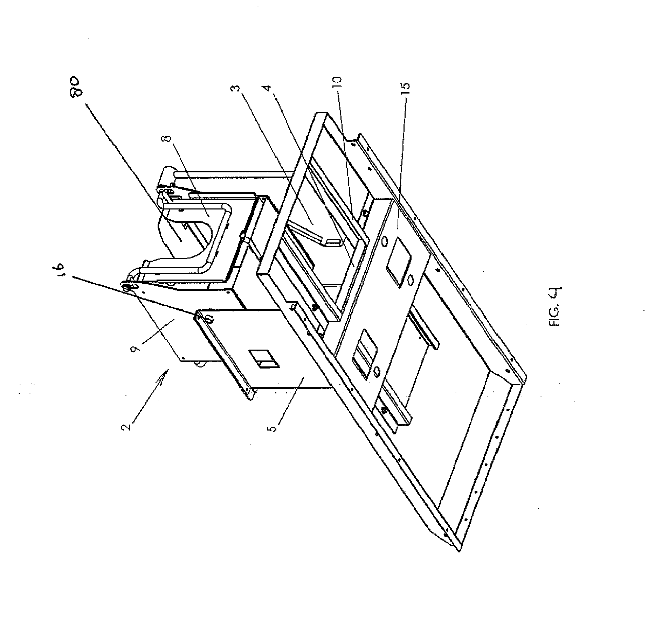

In figure 3, the container filling apparatus 2 is shown in a perspective view. In this figure the container filling apparatus 2 is in an 'empty' position, because mounting frame 5 is empty. The dispense hole 3 is opened by sliding backwards dispense hole cover 4. Dispense hole cover 4 can slide back and forth in guiding 10 (figure 4), and closes off dispense hole 3 and prevents that any object or liquid may fall in the open-ended container under the dispense hole 3. Through the dispense hole 3 dye may be dispensed in a container which contains one of the base colours.

As can be seen in figure 3, the container filling apparatus 2 is mounted on a mounting frame 5, in which the container filling apparatus 2 can rotate about a rotating spindle 16 (figure 4). The rotational movement can be induced by rotation handle 7. When the container filling apparatus 2 is rotated approximately 180°, the squeeze handle spindle 60 collides into rib 51 in notch 50. This rib 51 prevents the container filling apparatus 2 from rotating any further.

For filling the containers, flexible filling cartridges containing dye are used, for instance a bag. A bag typically used for this purpose a square form and can be placed closely fitting into the container filling apparatus 2. Any other type or shape of flexible cartridge may also be used, and the container filling apparatus 2 may be adapted for such type or shape. Also, it may be possible that the bags are part of standard package, for instance a carton box containing the bag, and that the bag is taken out of the carton box before placing it in the container filling apparatus 102.

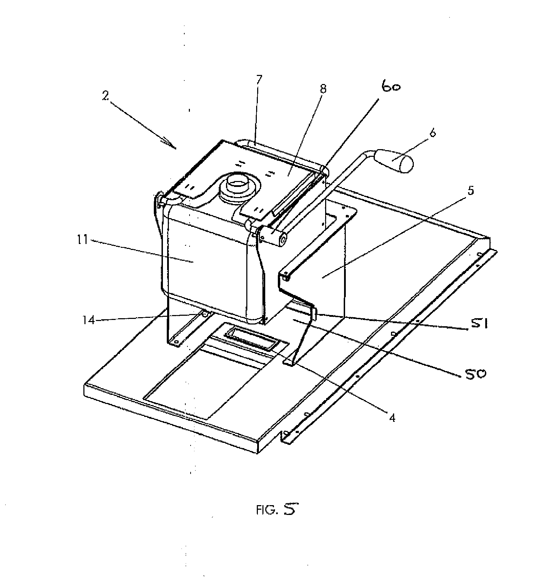

Before the bags are placed in the container filling apparatus 2, the cap of the bag is removed, and the squeeze plate 8 is rotated from the position in figure 3 upwards into the position shown in figure 5, and laid down on housing plate 91 (figure 5). After this the bag is placed in the container filling apparatus 2, with the opening of the bag tightly fitting in groove 90.

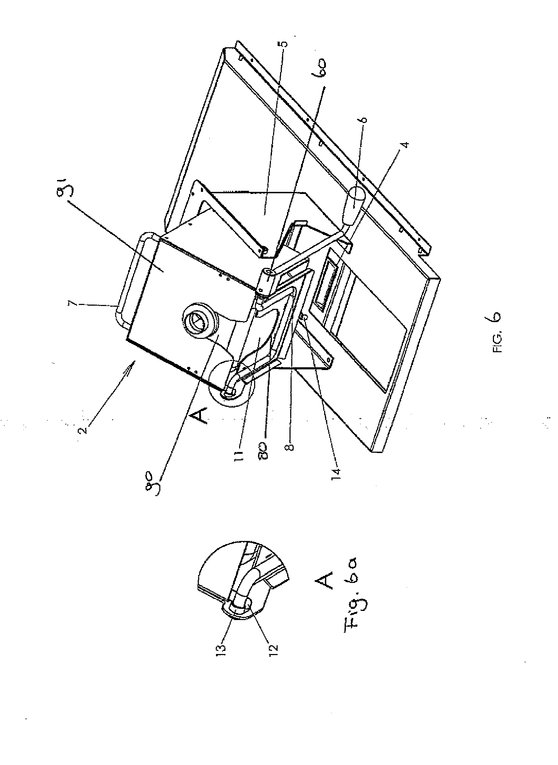

Figure 6 shows the rotational movement of the container filling apparatus 2. During the movements of the container filling apparatus 2 and the emptying of the bag, the bag has to be kept in place. In the housing 9 the bag is hold in place by groove 90 and squeeze plate 8. Squeeze plate 8 is in its turn kept in position by bearing bush 13, spring 12, squeeze handle spindle 60 and by locking spring 14. Bearing bush 13 and squeeze handle spindle 60 provide an axis around which squeeze plate 8 can turn. When the mounting frame 5 is filled with a bag, squeeze plate 8 is pushed against it, just past locking spring 14. Locking spring 14 prevents squeeze plate 8 from rotating backwards, and then opening mounting frame 5.

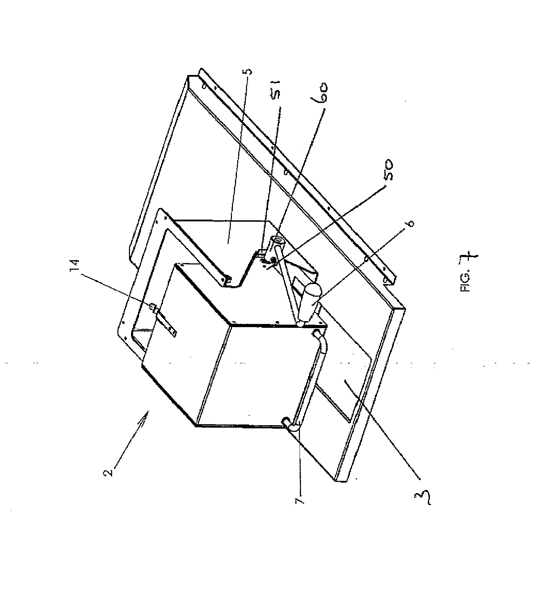

To induce the rotation of the container filling apparatus 2, rotating handle 7 can be used. The container filling apparatus 2 can be turned over by rotation handle 7, into an upside-down position. Rotation handle 7 has to be pulled forward, towards the dispensing hole.
The upside-down position is defined by a notch 50 and a rib 51 in mounting frame 5. The squeeze handle spindle 60 around which the squeeze handle 6 rotates, collides into the mounting frame rib 51 in the mounting frame notch 50, thus preventing the container filling apparatus 2 from rotating further, as can be seen in figure 7. In this upside down position the opening of the bag is located above the dispense hole 3.

The bag 11 can now be emptied by turning squeeze handle 6 towards the operator. By pulling squeeze handle 6 towards the operator, squeeze plate 8 rotates about an axis formed by squeeze handle spindle 60 and bearing bush 13. Through this rotational movement, squeeze plate 8 pushes the dye out of the bag, by making the space for the bag in the mounting frame 5 smaller and smaller. For an optimized squeezing movement of squeeze plate 8 there are is a spring 12 and a bearing bush 13, through which squeeze plate 8 can become parallel to the housing-plate 91. In figure 7, the position of the squeeze handle, corresponds to an almost emptied bag. At this moment, the bearing bush 13 moves upwards, considering the position of mounting frame 5 in this figure, overruling spring 12 (figure 6a). This makes it possible for the squeeze plate 8 to come into a parallel position with the upper plate 91 of the housing 9. When pressing squeeze handle 6 firmly, the bag will be emptied completely and all its contents will be dispensed in the container located under the dispense hole 3.

After emptying the bag with dye in the container placed under dispense hole 3, the housing 9 is turned backwards into its starting or filling position (figure 3) by rotation handle 7. Because there is no pressure any more on squeeze plate 8, squeeze plate 8 is forced back into its original position by the spring 12 (figure 6a). For removing the empty bag, spring 14 is pressed in the direction of the dispense hole 3, and releases squeeze plate 8. Squeeze plate 8 can be turned around bearing bush 13 and squeeze handle spindle 60 into the position that squeeze plate 8 lies on top of housing plate 91 (figure 5). Now the opening of the bag can be slid out from groove 90 and the bag can be removed from the container filling apparatus 2. When the empty bag is removed, a new bag can be placed to start the whole cycle all over again.

When the container under the container filling apparatus 2, or any other container does not to be filled, the dispenser hole 3 can be covered by sliding dispenser hole 4 cover in guiding 10 to cover dispenser hole 3.

From the foregoing and as mentioned above, it will be observed that numerous variations and modifications may be effected without departing from the spirit and scope of the novel concept of the invention. It is to be understood that no limitation with respect to the specific methods and apparatus illustrated herein is intended or should be inferred. It is, of course, intended to cover by the appended claims all such modifications as fall within the scope of the claims.

## Claims

1. A system for moulding coloured synthetic products, comprising:
- at least one moulding apparatus for moulding synthetic products,
- a dye dispensing apparatus comprising;
- a plurality of containers, each container configured to hold a liquid polymer dye, and
- a dispensing unit for dispensing one or more dyes from one or more of said plurality of containers,
- at least one exchangeable collector to collect dispensed dyes from the dye dispensing apparatus,
wherein the moulding apparatus comprises a connection device configured to connect the collector to the moulding apparatus for introduction of the dispensed dyes in the moulding apparatus.

2. The system of claim 1, wherein the system comprises a plurality of moulding apparatus, each moulding apparatus comprising a connecting device for connection of a collector containing dispensed dyes.

3. The system of claim 1 or 2, wherein the system further comprises a shaker apparatus configured to shake the collector to homogenize the dispensed dyes.

4. The system of any of the preceding claims, wherein the dye dispensing apparatus comprises a plurality of pumps, whereby each pump is associated with one of said plurality containers.

5. The system of claim 4, wherein said dye dispensing apparatus comprises
- a rotatable support configured to support the plurality of containers and the plurality of pumps, and
- a stationary pump actuating means, wherein by rotation of the rotatable support each of said pumps can be aligned with the stationary pump actuating means for dispensing of a dye from the container associated with the respective pump.

6. The system of any of the preceding claims, wherein the collector comprises a bag having a connector piece which is connectable to the connection device.

7. The system of any of the preceding claims, wherein the connecting device of said moulding apparatus is part of an injection device to inject the dispensed dyes from the collector into the moulding apparatus.

8. The system of claim 7, wherein the injection device comprises a pump to pump the dispensed dyes from the collector in the moulding apparatus.

9. The system of any of the preceding claims, wherein the dye dispensing apparatus comprises a container filling apparatus, said container filling apparatus comprising:
- a holding device to hold a filling cartridge containing a liquid polymer dye;
- a squeeze device to squeeze the filling cartridge above a respective container of said plurality of containers to dispense the dye into the container.

10. A method for producing coloured synthetic products, comprising the steps of:
- providing at least one moulding apparatus for moulding synthetic products, having a connection device,
- providing a dye dispensing apparatus comprising;
- a plurality of containers, each container configured to hold a liquid polymer dye, and
- a dispensing unit for dispensing one or more dyes from one or more of said plurality of containers,
- providing at least one exchangeable collector to collect said dispensed dyes, the collector being connectable to the connection device,
- dispensing one or more dyes from one or more of said plurality of containers in the collector to provide a mixture of dyes having a desired colour,
- connecting the collector to the connection device,
- introducing the mixture of dyes from the collector in the moulding apparatus, and
- moulding one or more synthetic products with said moulding apparatus.

11. The method of claim 10, wherein the method further comprises the step of:
- providing a shaker apparatus configured to hold and shake a collector, and
- after the dispensing step but before the connecting step, shaking of the collector in the shaker apparatus to homogenize the dispensed dyes in the collector.

12. The method of claim 10 or 11, wherein introducing the mixture of dyes and the moulding of one or more synthetic products is performed substantially simultaneously.

13. The method of any of the claims 10-12, wherein the steps of dispensing, connecting, introducing, and moulding are repeated to provide a plurality of collectors each comprising a mixture of dispensed dyes.

14. The method of claim 13, wherein the plurality of collectors are used in the moulding process of one or more synthetic products in one or more moulding apparatus of the same or different types.

15. A dye dispensing apparatus comprising;
- a plurality of containers, each container configured to hold a liquid,
- a dispensing unit for dispensing one or more dyes from one or more of said plurality of containers, and
- a collector to collect said dispensed dyes,
wherein said dye dispensing apparatus further comprises a container filling apparatus, said container filling apparatus comprising:
- a holding device to hold a flexible filling cartridge containing a liquid polymer dye; and
- a squeeze device to squeeze the filling cartridge above a respective container of said plurality of containers to dispense the dye into the container.
